# EUROPEAN PATENT SPECIFICATION

(11) **EP 3 175 979 B1**
(45) Date of publication and mention of the grant of the patent: **04.03.2020**
(21) Application number: 15827466.2
(22) Date of filing: 09.07.2015
(51) Int. Cl.: B29C 70/10, B32B 5/12, B29C 43/18, B32B 5/28, B32B 27/38, B29K 63/00, B29K 105/08, B29C 70/14, B29C 70/22

(54) **MOLDED OBJECT AND PROCESS FOR PRODUCING SAME**
FORMGEGENSTAND UND VERFAHREN ZUR HERSTELLUNG DAVON
OBJET MOULÉ ET PROCÉDÉ DE PRODUCTION ASSOCIÉ

(30) Priority: 31.07.2014 JP 2014155848
(43) Date of publication of application: 07.06.2017
(73) Proprietor: KOMATSU MATERE Co., Ltd., Nomi-city Ishikawa 929-0124 (JP)
(72) Inventor: HAYASHI, Yutaka, Nomi-city Ishikawa 929-0124 (JP); NAKAYAMA, Taketoshi, Nomi-city Ishikawa 929-0124 (JP); NODA, Honami, Nomi-city Ishikawa 929-0124 (JP)
(74) Representative: Vigand, Philippe
(86) International application number: PCT/JP2015/003471
(87) International publication number: WO 2016/017080

(56) References cited:
- EP-A1- 1 555 104
- WO-A1-2012/102315
- WO-A1-2014/097666
- WO-A1-2015/057270
- JP-A- 2006 321 896
- JP-A- 2006 321 897
- JP-A- 2007 253 573
- JP-A- 2011 516 654
- JP-A- 2012 125 948
- JP-A- 2012 196 899
- JP-A- 2012 251 043
- JP-A- 2013 176 876
- JP-A- 2013 544 310
- JP-U- S63 180 208

## Description

### [Technical Field]

The present invention relates to a molded object and a method of manufacturing the same, and particularly relates to a fiber-reinforced resin molded object formed using reinforcement fibers and resin and a method of manufacturing the same.

### [Background Art]

As fiber-reinforced resin molded objects formed using reinforcement fibers and resin, sheet-like thermosetting prepregs (thermosetting prepreg sheets) including reinforcement fibers such as glass fibers and thermosetting resin such as thermosetting epoxy resin have been known.

However, thermosetting prepreg sheets have problems in that they cannot be remolded and also a low-temperature cold storage and the like are needed to store uncured sheets (before heat curing). Besides, curing thermosetting resin requires a long time, which is problematic in terms of productivity.

To overcome these drawbacks, fiber-reinforced molded objects including carbon fibers as reinforcement fibers and thermoplastic resin as resin have been proposed.

Carbon fibers are, however, anisotropic in that the strength in the shear direction is low while the strength in the fiber axial direction is high.

The following technique has accordingly been proposed: Carbon fibers are aligned unidirectionally in sheet form, a plurality of resin sheets (prepreg sheets) provided with thermoplastic resin are stacked on the carbon fibers in different fiber axial directions, and pressure is applied to manufacture a molded object (Patent Literature (PTL) 1).

### [Citation List]

### [Patent Literature]

[PTL 1]
Japanese Unexamined Patent Application Publication No. H07-214714

Documents JP 2012 125948 and JP 2007 253573 disclose a molded object (and the related manufacturing method) comprising a first layer formed using a fiber-reinforced resin material including thermoplastic resin and strip-shaped reinforcement fiber bundles each composed of a plurality of reinforcement fibers aligned unidirectionally, the strip-shaped reinforcement fiber bundles being three-dimensionally and randomly stacked; and a second layer made of a fiber-reinforced resin material including thermoplastic resin and reinforcement fibers of filaments, and formed on one surface of the first layer.

### [Summary of Invention]

### [Technical Problem]

However, there is a problem in that the operation of stacking the plurality of prepreg sheets while changing the fiber axial direction and applying pressure is complex and causes an increase in production cost. There is also a problem in that, when the molded object formed by stacking the plurality of prepreg sheets obtained using woven fabric and the like is dropped to the floor or hit by something hard, fabrics peel off each other or the molded object cracks.

As fiber-reinforced molded objects formed using thermoplastic resin, fiber-reinforced molded objects in which, by stirring thermoplastic resin and reinforcement fibers by a screw-type stirrer or the like, the reinforcement fibers are present in the thermoplastic resin in random axial directions have been known.

Such molded objects are less likely to have anisotropy, i.e. mechanical properties such as strength and elastic modulus differing depending on direction. However, there is a possibility that, when stirring the thermoplastic resin and the reinforcement fibers, the reinforcement fibers such as carbon fibers crack and break and the strength of the molded object decreases.

In view of this, the inventors have discovered that a molded object with excellent strength can be obtained by heating and applying pressure to a stack object obtained by randomly stacking a fiber-reinforced resin material including thermoplastic resin and strip-shaped bundles of reinforcement fibers (reinforcement fiber bundles) each composed of a plurality of reinforcement fibers aligned unidirectionally.

This method has successfully produced a molded product such as a flat product, e.g. a plate-like object, or a tray with a depth of about 1 cm to 2 cm which is less than the length of the fibers constituting the strip-shaped reinforcement fiber bundle.

Regarding a thin molded object of 2 mm or less in thickness with a depth exceeding 1 cm to 2 cm or a molded object with a depth greater than the length of the fibers constituting the strip-shaped reinforcement fiber bundle, however, there has still been room for improvement in appearance and strength as indicated by some instances of perforation in part of the molded object caused by a press when applying pressure.

In view of such problems, the present invention has an object of providing a molded object having excellent appearance and excellent strength and a method of manufacturing the same.

### [Solution to Problem]

To achieve the object, a molded object according to the present invention includes: a first layer formed using a fiber-reinforced resin material including thermoplastic resin and strip-shaped reinforcement fiber bundles each composed of a plurality of reinforcement fibers aligned unidirectionally, the strip-shaped reinforcement fiber bundles being three-dimensionally and randomly stacked; and a second layer made of a fiber-reinforced resin material including thermoplastic resin and reinforcement fibers of filaments, and formed on both surfaces of the first layer.

In the molded object according to the present invention, the reinforcement fibers used in the second layer 20 may be in woven fabric form.

In the molded object according to the present invention, the strip-shaped reinforcement fiber bundles may be each 5 mm or more and 500 mm or less in length.

In the molded object according to the present invention, the thermoplastic resin used in each of the first layer and the second layer is a late-reactive thermoplastic epoxy resin that is cured as a result of initiating or promoting reaction by adding a curing agent.

In the molded object according to the present invention, the reinforcement fibers used in each of the first layer and the second layer may be carbon fibers.

A method of manufacturing a molded object according to the present invention is defined in claim 8.

In the method of manufacturing a molded object according to the present invention, the reinforcement fibers of filaments may be in woven fabric form.

### [Advantageous Effects of Invention]

According to the present invention, it is possible to provide a molded object (molded product) having excellent appearance and excellent strength such as shock resistance.

### [Brief Description of Drawings]

[FIG. 1A]

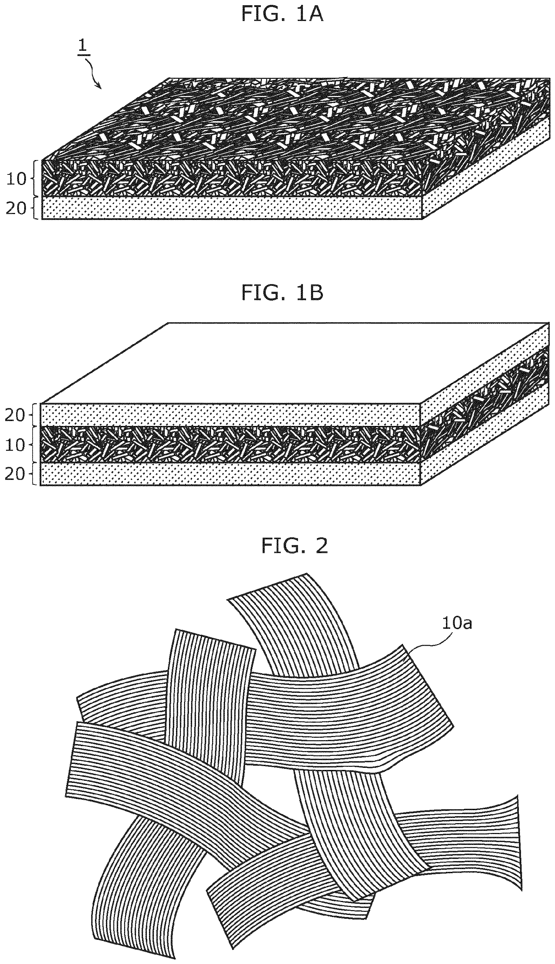

   FIG. 1A is a sectional perspective view schematically illustrating the structure of a molded object which is not part of the present invention.
[FIG. 1B]
   FIG. 1B is a sectional perspective view schematically illustrating the structure of a molded object according to an embodiment of the present invention.
[FIG. 2]
   FIG. 2 is a view illustrating a part of a first layer of a molded object according to an embodiment of the present invention.
[FIG. 3]

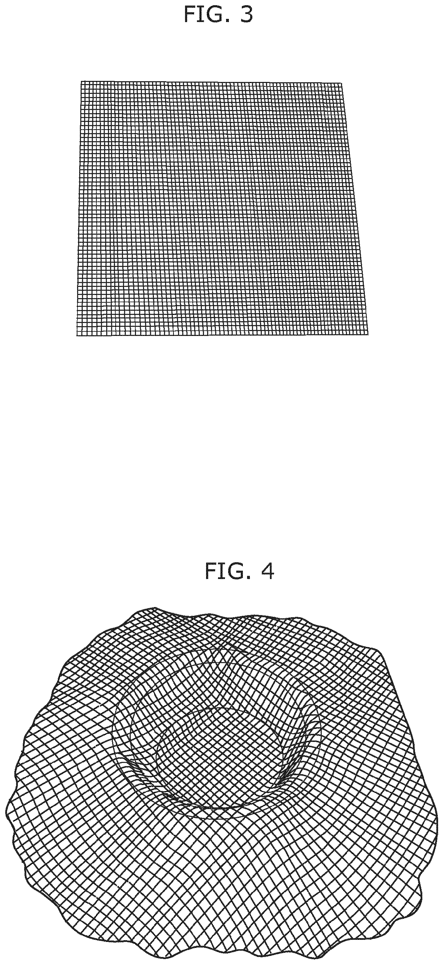

   FIG. 3 is a view illustrating a flat molded object in an example.
[FIG. 4]
   FIG. 4 is an external view of a molded object having unevenness in an example, as seen from the front.
[FIG. 5]

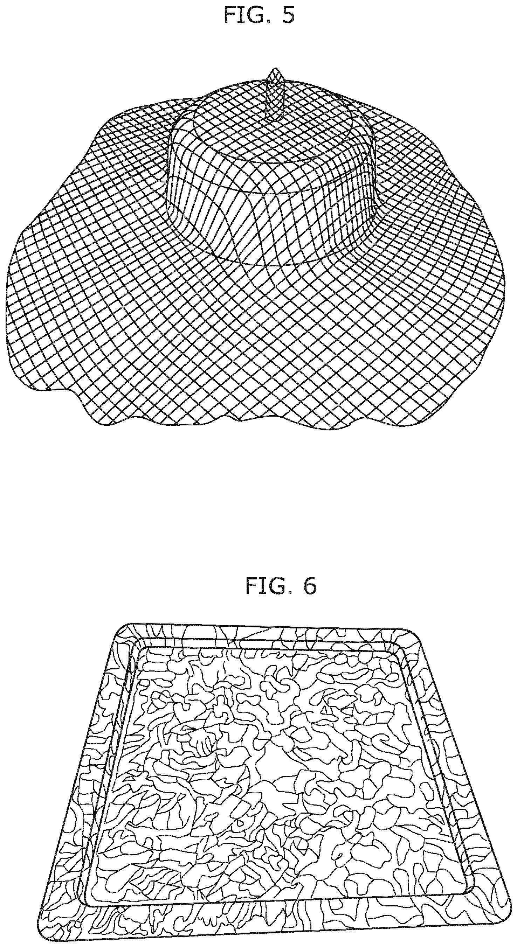

   FIG. 5 is an external view of the molded object having unevenness in the example, as seen from the back.
[FIG. 6]
   FIG. 6 is an external view of a molded object having unevenness in Reference Example 1, as seen from the front.
[FIG. 7]

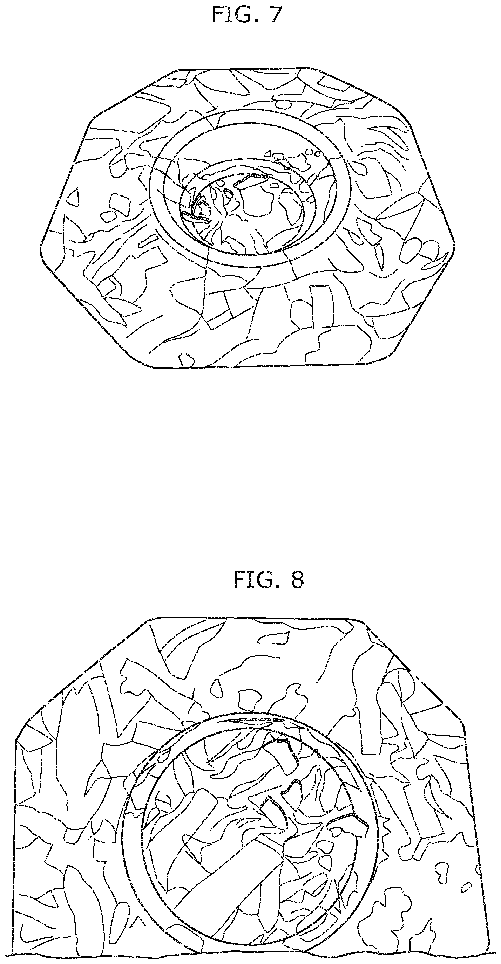

   FIG. 7 is an external view of a molded object having unevenness in Reference Example 2, as seen from the front.
[FIG. 8]
   FIG. 8 is an external view of the molded object having unevenness in Reference Example 2, as seen from the back.

### [Description of Embodiments]

Embodiments of the present invention are described below. It should be understood that the present invention is not limited to these embodiments and various modifications are possible within the scope of the present invention as defined by the appended claims.

### (Molded object)

FIG. 1A is a sectional perspective view schematically illustrating the structure of a molded object which is not part of the present invention.

A molded object 1 according to this example is a fiber-reinforced resin molded object formed using reinforcement fibers and resin, and is a sheet-like prepreg (prepreg sheet). As illustrated in FIG. 1A, the molded object 1 includes a lamellar first layer 10 and a sheet-like second layer 20 formed on one surface of the first layer 10.

According to the invention, the second layer 20 is formed on both surfaces of the first layer 10, as illustrated in FIG. 1B.

### <First layer>

The first layer 10 is formed using a fiber-reinforced resin material including thermoplastic resin and strip-shaped bundles of reinforcement fibers (reinforcement fiber bundles) each composed of a plurality of reinforcement fibers aligned unidirectionally, and is a layer having a stack structure in which the strip-shaped reinforcement fiber bundles are three-dimensionally and randomly stacked.

The fiber-reinforced resin material forming the first layer 10 includes the thermoplastic resin and the reinforcement fiber bundles, and so has thermoplasticity. Accordingly, even after the molded object 1 is formed by curing, the molded object 1 can be easily changed to any shape by heating and pressure application.

The thickness of the first layer 10 is preferably 50 µm or more, and more preferably 100 µm or more. If the thickness of the first layer 10 is less than 100 µm, the molded object 1 may not have sufficient fracture toughness, shock resistance, and bending strength. The thickness of the first layer 10 is preferably 300 µm or more, and more preferably 500 µm or more. The upper limit of the thickness of the first layer 10 is not particularly limited. In terms of moldability, the thickness of the first layer 10 may be 20 cm or less. The thickness of the first layer 10 is preferably 10 cm or less, more preferably 5 cm or less, and further preferably 1 cm or less.

The first layer 10 is made by three-dimensionally and randomly stacking strip-shaped reinforcement fiber bundles each composed of a plurality of reinforcement fibers aligned unidirectionally, as mentioned above. Here, "three-dimensionally and randomly stacking strip-shaped reinforcement fiber bundles each composed of a plurality of reinforcement fibers aligned unidirectionally" means a state where a plurality of strip-shaped reinforcement fiber bundles 10a each obtained by unidirectionally aligning a plurality of reinforcement fibers are stacked so as to overlap each other in the thickness direction of the first layer 10 with the fiber axial direction of each bundle being random with respect to the plane direction of the first layer 10, as illustrated in FIG. 2. In more detail, this is a state where the plurality of strip-shaped reinforcement fiber bundles 10a are stacked so that the bundles 10a partially overlap each other with their fiber axial directions being random in the upper and lower surfaces of the bundle 10a and also the bundles 10a overlap each other while slightly inclining randomly with respect to the plane direction of the first layer 10. FIG. 2 is a view illustrating a part of the first layer of the molded object according to the embodiment of the present invention, and illustrates a state where strip-shaped reinforcement fiber bundles are three-dimensionally and randomly stacked.

By three-dimensionally and randomly stacking the strip-shaped reinforcement fiber bundles 10a in this way, it is possible to obtain a molded object having better shock resistance and fracture toughness.

Each strip-shaped reinforcement fiber bundle 10a need not necessarily incline with respect to the plane direction of the first layer 10, and the plurality of strip-shaped reinforcement fiber bundles 10a may include one or more bundles 10a not inclining with respect to the plane direction of the first layer 10. The fiber-reinforced resin material forming the first layer 10 may include substances other than the reinforcement fiber and the thermoplastic resin, such as a catalyst, an antioxidant, and a pigment.

### <Thermoplastic resin>

The thermoplastic resin used in the molded object 1 is a late-reactive thermoplastic epoxy resin which has thermoplasticity even after curing.

The fiber-reinforced resin molded object obtained using such thermoplastic resin can be, even after molding, easily changed in shape by heating, and easily recycled.

The late-reactive thermoplastic resin is reactive resin that is cured as a result of initiating, promoting, etc. reaction by adding a curing agent such as a cross-linking agent, a catalyst, a polymerization initiator, or a polymerization accelerator, and has thermoplasticity even after curing. Late-reactive thermoplastic epoxy resin in this embodiment includes those which become phenoxy resin after reaction.

When the late-reactive thermoplastic resin obtained as a result of reaction after being added to the strip-shaped reinforcement fiber bundles is used, the inside of the reinforcement fiber bundles is impregnated with the resin. This is preferable in terms of improving strength such as fracture toughness, bending strength, and shock resistance and also in terms of stability of various performance such as strength and moldability.

A plurality of types of thermoplastic resin may be blended. Moreover, the thermoplastic resin may contain thermosetting resin without departing from the object of the present invention.

As the late-reactive thermoplastic resin, late-reactive thermoplastic epoxy resin is particularly preferable in terms of strength such as fracture toughness, bending strength, and shock resistance and also in terms of durability including chemical resistance such as acid resistance and alkali resistance. In the case of using carbon fiber as the reinforcement fiber, late-reactive thermoplastic epoxy resin is also preferable in terms of affinity for carbon fiber. Making the molded object 1 using the fiber-reinforced resin material including the late-reactive thermoplastic epoxy resin and the carbon fiber further improves strength, durability, and stability. In terms of productivity, 6,6-nylon that can complete reaction at about 160°C is preferable as the late-reactive thermoplastic resin.

Such late-reactive thermoplastic resin can be in liquid form at normal temperature before being cured by the curing agent, or in the form of being dissolved or dispersed by a solvent. Moreover, the thermoplastic resin has low molecular weight and high fluidity before reaction, and can be polymerized (for example, polymerized to 10000 or more, or 30000 or more in number average molecular weight) after the reaction, as compared with non-reactive thermoplastic resin which is heated and molten for use. Furthermore, the crosslink state can be adjusted. Hence, the inside of the reinforcement fiber bundles can be impregnated with the thermoplastic resin. Since the thermoplastic resin is able to exist inside the reinforcement fiber bundles, the reinforcement fibers and the thermoplastic resin intertwine (are in contact) with each other sufficiently, and the formation of spaces such as air bubbles is suppressed. The molded object 1 obtained using the fiber-reinforced resin material including the thermoplastic resin therefore has excellent strength, and also has stable strength with little variation. The molded object 1 can also be adjusted in flexibility and thermal deformation property.

The glass transition point of the thermoplastic resin is preferably 90°C to 200°C. The glass transition point of the thermoplastic resin is more preferably 95°C or more, in terms of the thermal stability of the molded object 1. The glass transition point of the thermoplastic resin is more preferably 170°C or less, and further preferably 150°C or less, in terms of the moldability of the molded object 1. The glass transition point can be measured using the cured thermoplastic resin by differential scanning calorimetry (DSC).

### <Reinforcement fiber bundle>

The reinforcement fibers used in the molded object 1 in this embodiment are inorganic fibers, organic fibers, metal fibers, or any combination thereof. Specific examples include carbon fibers, graphitic fibers, silicon carbide fibers, alumina fibers, tungsten carbide fibers, boron fibers, glass fibers, basalt fibers, para-aramid fibers, meta-aramid fibers, ultra-high molecular weight polyethylene fibers, polyarylate fibers, poly-p-phenylenebenzoxazole (PBO) fibers, polyphenylene sulfide (PPS) fibers, polyimide fibers, fluorine fibers, polyvinyl alcohol (PVA fibers), stainless steel, and iron.

As the reinforcement fibers, carbon fibers or basalt fibers are preferable and carbon fibers are particularly preferable in terms of light weight and high strength. The carbon fibers may be PAN, pitch, or the like, although not particularly limited to such. Of these, PAN carbon fibers are preferably used as the reinforcement fibers in terms of the balance between strength and elastic modulus.

In the molded object 1 in this embodiment, the plurality of reinforcement fibers are aligned unidirectionally and bundled as mentioned above. The plurality of reinforcement fibers aligned unidirectionally and bundled are the plurality of reinforcement fibers that coincide in the fiber axial direction and constitute the reinforcement fiber bundle. The reinforcement fiber bundle or the reinforcement fibers constituting the bundle may be bent or meandering, as long as the axial directions of the reinforcement fibers constituting the reinforcement fiber bundle approximately coincide with each other. Particularly in a molded object formed by heating and applying pressure, the reinforcement fibers or the reinforcement fiber bundle often has a shape such as bent, meandering, or partly crushed and widened, due to the uneven shape of the molded object or the entanglement of the reinforcement fibers or reinforcement fiber bundles. The concept "three-dimensionally and randomly stacked strip-shaped reinforcement fiber bundles" includes such a state where reinforcement fibers or reinforcement fiber bundles are deformed, e.g. bent or meandering, as a result of pressure application or the like.

The reinforcement fibers may be bundled with or without a sizing agent, as long as the single fibers of two or more reinforcement fibers are bundled. The reinforcement fibers are preferably bundled with a sizing agent, in terms of productivity. In the case of using a sizing agent, the sizing agent preferably has high affinity for the thermoplastic resin. The use of the sizing agent with high affinity for the thermoplastic resin facilitates the impregnation of the reinforcement fiber bundle with the thermoplastic resin, with it being possible to obtain a fiber-reinforced resin molded object having excellent and stable strength.

The reinforcement fiber bundle obtained by unidirectionally aligning the plurality of reinforcement fibers is preferably a bundle of 1000 or more single fibers of reinforcement fibers, and more preferably 10000 or more single fibers of reinforcement fibers. The upper limit of the number of single fibers of reinforcement fibers is not particularly limited, but is about 500000 in the case where the reinforcement fiber bundle is not opened. A larger number of single fibers of reinforcement fibers may be used in the case where the reinforcement fiber bundle is opened.

For example, the reinforcement fiber bundle may be a product obtained by bundling 6000 (6K) single fibers of carbon fibers supplied from a carbon fiber manufacturer, a product obtained by bundling 12000 (12K) single fibers of such carbon fibers, a product obtained by bundling 24000 (24K) single fibers of such carbon fibers, a product obtained by bundling 40000 (40K) single fibers of such carbon fibers, a product obtained by bundling 50000 (50K) single fibers of such carbon fibers, a product obtained by bundling 60000 (60K) single fibers of such carbon fibers, or the like. The reinforcement fiber bundle may be a bundle of carbon fibers of TORAYCA® (T700SC-24000, etc.) made by Toray Industries, Inc., a bundle of carbon fibers of PYROFIL® made by Mitsubishi Rayon Co., Ltd., a bundle of carbon fibers of Tenax® made by Toho Tenax Co., Ltd., or any combination thereof. These carbon fiber bundles can be directly used in a state of being wound around a drum or the like without opening treatment, etc., and so have excellent productivity. The carbon fiber bundle which has undergone opening treatment may be used. The carbon fiber bundle may be non-twisted yarn, twisted yarn, or untwisted yarn.

The reinforcement fiber bundle in this embodiment is strip-shaped. Preferably, the reinforcement fiber bundle is about 5 mm or more and 500 mm or less in length in the fiber axial direction and about 1 mm to 300 mm in length (width) in the direction perpendicular to the fiber axial direction, and has a strip shape of being longer in the fiber axial direction than in the width direction. If the length of the carbon fiber bundle is less than 5 mm, sufficient strength may not be attained. If the length of the carbon fiber bundle is more than 500 mm, strength variation or strength anisotropy may arise.

The length of the reinforcement fiber bundle in the fiber axial direction is more preferably 10 mm to 100 mm, in terms of the strength and strength stability of the molded object. The width of the reinforcement fiber bundle is more preferably 3 mm to 30 mm.

The length of each reinforcement fiber constituting the strip-shaped reinforcement fiber bundle may be 5 mm to 500 mm. In other words, the length of each reinforcement fiber constituting the strip-shaped reinforcement fiber bundle may be substantially the same as the length of the strip-shaped reinforcement fiber bundle obtained by bundling the plurality of reinforcement fibers unidirectionally.

The thickness of the strip-shaped reinforcement fiber bundle is not particularly limited, but may be less than the length in the fiber axial direction or width of the strip-shaped reinforcement fiber bundle. The thickness of the strip-shaped reinforcement fiber bundle is about 0.02 mm to 10 mm and, in terms of the strength of the molded object, more preferably 0.2 mm to 5 mm.

### <Second layer>

The second layer 20 in this embodiment is described below. Here, the description of the same matters as those described above is partly omitted.

The second layer 20 is made of a fiber-reinforced resin material including thermoplastic resin and reinforcement fibers of filaments (reinforcement filaments). The second layer 20 is stacked on both surfaces of the first layer 10 in terms of strength and appearance, as illustrated in FIG. 1B.

The reinforcement fibers in the second layer 20 may be the same as those in the first layer 10. As the reinforcement fibers, carbon fibers are particularly preferable as in the first layer 10.

The reinforcement fibers in the first layer 10 are the strip-shaped reinforcement fiber bundles each composed of a plurality of reinforcement fibers aligned unidirectionally, as mentioned above. Meanwhile, the reinforcement fibers in the second layer 20 are reinforcement filaments, in the shape of a sheet-like object such as woven fabric, knitted fabric, or nonwoven fabric. The reinforcement fibers in the second layer 20 are preferably woven fabric including reinforcement filaments, in terms of the appearance of the molded object and the formability of the sheet-like object. Examples of such woven fabric including reinforcement fibers include plain woven fabric, twill fabric, and satin fabric obtained using a bundle of filaments of carbon fibers such as 6K, 12K, 24K, 40K, 50K, 60K, a combination thereof, or the like. Such a bundle of filaments of carbon fibers may be opened or not opened.

The thermoplastic resin in the second layer 20 is late-reactive thermoplastic epoxy resin.

The thickness of the outer layer of the second layer 20 is not particularly limited, but is about 0.02 mm to 10 mm.

### <Molded object>

The molded object 1 in this embodiment is described below. Here, the description of the same matters as those described above is partly omitted.

The molded object 1 in this embodiment includes: the first layer 10 obtained by processing a fiber-reinforced resin material including thermoplastic resin and strip-shaped reinforcement fiber bundles each composed of a plurality of reinforcement fibers aligned unidirectionally, the strip-shaped reinforcement fiber bundles being three-dimensionally and randomly stacked; and the second layer 20 made of a fiber-reinforced resin material including thermoplastic resin and reinforcement filaments, and formed on both surfaces of the first layer 10.

Although the molded object 1 in this embodiment is shaped like a flat sheet, the shape is not particularly limited, and the molded object 1 may be uneven as in a housing of a television or the like. Moreover, the molded object 1 initially manufactured in flat sheet form may be processed in a desired shape at any time. Since thermoplastic resin is used in each of the first layer 10 and second layer 20 in the molded object 1 in this embodiment, a molded object of any shape can be easily obtained by heating and applying pressure at any time. In addition, the use of late-reactive thermoplastic resin makes it possible to obtain a molded object having more stable performance in strength and moldability.

In the case of processing the molded object by heating and applying pressure, the depth of unevenness in the molded object may be less than 1 cm, 1 cm or more, 3 cm or more, or 5 cm or more.

As described above, the molded object 1 in this embodiment includes the first layer 10 formed using a fiber-reinforced resin material including thermoplastic resin and strip-shaped reinforcement fiber bundles each composed of a plurality of reinforcement fibers aligned unidirectionally, the strip-shaped reinforcement fiber bundles being three-dimensionally and randomly stacked. This suppresses anisotropy. In detail, while the reinforcement fibers in each reinforcement fiber bundle are aligned unidirectionally, the plurality of reinforcement fiber bundles constituting the first layer 10 are three-dimensionally and randomly arranged.

Accordingly, the molded object 1 in this embodiment has no anisotropy which may be seen in a fiber-reinforced resin molded object obtained by unidirectionally aligning opened carbon fibers, and has uniform strength in all directions. Moreover, even when subjected to vibration or shock during pressure forming or in the state of end product, the molded object 1 in this embodiment can be prevented from a phenomenon of delamination which may occur in a fiber-reinforced resin molded object in which a plurality of opened woven fabrics are stacked.

A fiber-reinforced resin molded object obtained by stacking carbon fiber woven fabric cracks easily when subjected to a large force. Besides, the fractured section of the cracked part is sharp, and the cut surface tends to be exposed. Thus, if the fiber-reinforced resin molded object cracks, there is a possibility of secondary damage such as some part of the body being cut or the like by the fractured section.

In the molded object 1 in this embodiment, on the other hand, the plurality of reinforcement fiber bundles in the first layer 10 are three-dimensionally and randomly stacked. Hence, even when the molded object 1 cracks as a result of being subjected to a large force, its fractured section is not sharp, and also is not exposed. Such a molded object 1 has excellent safety as the aforementioned secondary damage can be prevented.

Furthermore, the molded object 1 in this embodiment has excellent toughness and shock resistance. Accordingly, the molded object 1 resists cracking when subjected to a large force. Even when the molded object 1 cracks, its strength does not decrease significantly at once, but decreases in several steps. This prevents considerable damage from occurring at once in the case where the molded object cracks.

If the length of the reinforcement fibers used in the first layer 10 in the molded object 1 in this embodiment is 10 mm or more and 30 mm or less, the molded object 1 does not crack unless at least a predetermined force is applied. Even when the molded object 1 cracks, a sharp fractured section is unlikely to form. If the length of the fiber-reinforced resin material and reinforcement fibers is more than 30 mm or, more preferably, more than 40 mm, the molded object 1 resists cracking even when subjected to a stronger shock. Even when the molded object 1 cracks, a sharp fractured section is unlikely to form. Thus, the properties of the fiber-reinforced resin molded object can be adjusted by changing the length of the fiber-reinforced resin material and reinforcement fibers.

The molded object 1 in this embodiment includes the first layer 10 and the second layer 20. In particular, when the first layer 10 is interposed between the two second layers 20 as illustrated in FIG. 1B, it is possible to, while ensuring shock resistance and fracture toughness as mentioned above, suppress a decrease in appearance such as perforation in the molded object obtained by heating and pressure application and also suppress significant variation in strength even in the case where the first layer 10 is thin, e.g. 2 mm or less, and the depth of unevenness is more than 1 cm, or the length of the reinforcement fiber bundles in the fiber axial direction or the length of reinforcement fibers in the first layer 10 is less than the depth of unevenness.

The volume fraction of fiber (Vf value) of the molded object 1 in this embodiment is preferably 30% to 80%. The Vf value of the molded object 1 is more preferably 40% or more and further preferably 50% or more, in terms of the strength of the molded object 1. The Vf value of the molded object 1 is more preferably 70% or less and further preferably 60% or less, in terms of the moldability of the molded object 1 obtained using the fiber-reinforced resin material.

In the case where a space forms inside the molded object 1, the Vf value of the molded object 1 is preferably 50% or less and more preferably 45% or less, to prevent the formation of such a space. The formation of a space inside the molded object 1 can also be prevented by removing air in the first layer 10, in the second layer 20, and between the layers by, for example, applying pressure in a vacuum environment or increasing the heating temperature to reduce the viscosity of the resin. The formation of a space inside the molded object 1 may cause a decrease or variation in strength of the molded object 1.

If the Vf value of the molded object 1 is low, there is a possibility that the strength of the molded object 1 may decrease. Accordingly, in the case where the molded object 1 is required to have high strength, the Vf value may be increased by removing excessive thermoplastic resin during heating and pressure application as described below. In other words, the Vf value of the molded object 1 may be higher after heating and pressure application than before heating and pressure application.

The thickness of the molded object 1 in this embodiment is not particularly limited, and may be set to any thickness depending on the intended use of the molded object and the like. For example, the thickness of the molded object 1 is preferably 0.07 mm or more, more preferably 0.1 mm or more, still more preferably 0.2 mm or more and 200 mm or less, and further preferably 1 mm or more and 70 mm or less, in terms of strength and moldability.

In the molded object 1 in this embodiment, another resin sheet which has been colored, a retroreflection sheet, a phosphorescent sheet, or the like may be stacked on at least one of the surfaces forming the outer layers of the first layer 10 and second layer 20, to enhance design or visibility.

In the case of the molded object 1 in this embodiment, molding can be performed even after curing resin, unlike a molded object made of only thermosetting resin. Low-temperature storage until molding is unnecessary unlike thermosetting epoxy resin, and the molded object 1 is easy to use without any problem of storage period. The molded object 1 is also excellent in productivity as long curing time is not required.

The molded object 1 in this embodiment does not have degraded appearance and strength variation even when it has deep unevenness, as compared with a sheet-like object obtained using high-strength fiber woven fabric and thermoplastic resin or a molded object obtained using strip-shaped high-strength fiber bundles and thermoplastic resin. Such a molded object 1 can be put to various uses including automobile parts such as automobile chassis, building materials such as reinforcing bars, posts, and beams, and housings of electric appliances such as televisions, personal computers, and refrigerators, while conventional molded objects composed of high-strength fibers and resin have been hard to be used for such purposes.

In the molded object 1 in this embodiment, carbon fibers are used as the reinforcement fibers, and epoxy resin is used as the thermoplastic resin. Such a molded object is lightweight and excellent in durability, high strength, rust resistance, etc.

### (Method of manufacturing molded object)

The following describes an example of the method of manufacturing the molded object 1 according to this embodiment. The method of manufacturing the molded object 1 is not limited to the following method. Moreover, the description of the same matters as those described above is partly omitted.

The method of manufacturing the molded object 1 in this embodiment includes: a step of forming a sheet-like object made of a fiber-reinforced resin material including thermoplastic resin and reinforcement filaments; a step of forming a stack object by three-dimensionally and randomly stacking a strip-shaped fiber-reinforced resin material including thermoplastic resin and reinforcement fiber bundles each composed of a plurality of reinforcement fibers aligned unidirectionally; and a step of heating and applying pressure to a layered object obtained by stacking the sheet-like object and the stack object.

The fiber-reinforced resin material including thermoplastic resin and reinforcement filaments is used to form the second layer 20, and formed as a sheet-like object. The strip-shaped fiber-reinforced resin material including thermoplastic resin and reinforcement fiber bundles each composed of a plurality of reinforcement fibers aligned unidirectionally is used to form the first layer 10, and is formed as a stack object. The sheet-like object and the stack object can be formed by a known method. A preferable method is described below.

The reinforcement fibers and the thermoplastic resin used to form the sheet-like object and the stack object may be the materials used in the first layer 10 and the second layer 20 described above. By adding a thermoplastic resin solution to the reinforcement fiber bundles, the reinforcement fiber woven fabric, or the like, the fiber-reinforced resin material including the thermoplastic resin and the reinforcement filaments and the strip-shaped fiber-reinforced resin material including the thermoplastic resin and the plurality of reinforcement fibers aligned unidirectionally can be obtained.

Here, the reinforcement fibers including filaments in the fiber-reinforced resin material including the thermoplastic resin and the reinforcement filaments used in the second layer 20 may be in woven fabric form. In other words, the reinforcement fibers including filaments used when forming the sheet-like object may be in woven fabric form. When the reinforcement fibers including filaments are in woven fabric form, the shape of the reinforcement fibers including filaments is stable even in heating. Hence, perforation in the molded object is effectively suppressed in the case of manufacturing the molded object having large unevenness by heating and pressure application, and the molded object has excellent appearance.

The thermoplastic resin solution can be obtained by heating and dissolving the thermoplastic resin. The thermoplastic resin solution may include at least late-reactive thermoplastic resin and a solvent and a curing agent for dissolving and dispersing the late-reactive thermoplastic resin.

The thermoplastic resin solution is not limited to a solution in which a solute is completely dissolved in a solvent, but may be an emulsion, a dispersion, or the like.

Examples of the solvent of the thermoplastic resin solution include water, dimethylformamide, toluene, xylene, cyclohexane, methyl acetate, ethyl acetate, butyl acetate, acetone, methyl ethyl ketone, methyl isobutyl ketone, diisobutyl ketone, cyclohexanone, methanol, ethanol, butanol, isopropyl alcohol, methyl cellosolve, cellosolve, and anone.

Examples of the curing agent of the thermoplastic resin solution include cross-linking agents, catalysts, polymerization initiators, and polymerization accelerators. In epoxy resin system, examples include amine-based compounds such as aliphatic polyamine, polyaminoamide, ketimine, aliphatic diamine, aromatic diamine, imidazole, and tertiary amine, acid anhydride-based compounds, mercaptan-based compounds, phenol resin, amino resin, dicyandiamide, and lewis acid complex compounds. To improve the thermal stability of the shape of the molded object, a block-type cross-linking agent with a functional group number of more than 2 or a functional group number of 2 or more, such as a block-type isocyanate-based cross-linking agent, may be used.

Additives such as an antioxidant, an ultraviolet absorber, a pigment, a thickener, an emulsifier, and a dispersant may be added to the thermoplastic resin solution without departing from the object of the present invention.

The viscosity of the thermoplastic resin solution may be 5 mPa·s or more and 1000 mPa·s or less. If the viscosity of the thermoplastic resin solution is 5 mPa·s or more, a sufficient amount of thermoplastic resin can be added to the reinforcement fiber bundles or the woven fabric. The viscosity of the thermoplastic resin solution is preferably 10 mPa·s or more, and more preferably 50 mPa·s or more. If the viscosity of the thermoplastic resin solution is 1000 mPa·s or less, the thermoplastic resin can infiltrate into the reinforcement fiber bundles. The viscosity of the thermoplastic resin solution is preferably 800 mPa·s or less, and more preferably 500 mPa·s or less.

Examples of the method of adding the thermoplastic resin to the reinforcement fiber bundles or the woven fabric include: a dip method of immersing the reinforcement fiber bundles or the woven fabric in the thermoplastic resin solution; a dip-nip method of immersing the reinforcement fiber bundles or the woven fabric in the thermoplastic resin solution and then squeezing them with a mangle or the like; a transfer method of attaching the thermoplastic resin solution to a kiss roll, a gravure roll, or the like and transferring the thermoplastic resin to the reinforcement fiber bundles or the woven fabric from the kiss roll or the like; and a spray method of applying the thermoplastic resin solution in mist form to the reinforcement fiber bundles or the woven fabric. In the dip method, the transfer method, the spray method, etc., the reinforcement fiber bundles or woven fabric to which the thermoplastic resin solution is attached may be passed between dies or rolls or brought into contact with a roll, etc., to squeeze the thermoplastic resin into the reinforcement fibers or remove excessive thermoplastic resin to thus adjust the amount of thermoplastic resin added to the reinforcement fiber bundles or the woven fabric.

The amount of thermoplastic resin added to the reinforcement fiber bundles or the woven fabric or the amount of thermoplastic resin in the thermoplastic resin solution may be adjusted by the aforementioned method so that the molded object has a preferable Vf value.

In this embodiment, the viscosity of the thermoplastic resin solution can be low. Accordingly, in the case of adding the thermoplastic resin to one surface of the reinforcement fiber bundles or woven fabric in the transfer method, the thermoplastic resin can be easily infiltrated into the reinforcement carbon fiber bundles by, for example, bringing the transfer surface of the transferred thermoplastic resin into contact with a roll. The thermoplastic resin may be added to both surfaces of the reinforcement fiber bundles or woven fabric by the transfer method.

After adding the thermoplastic resin to the reinforcement fiber bundles or the woven fabric, drying and/or heat treatment is performed. Drying and heat treatment may be performed simultaneously. In the stage of obtaining the fiber-reinforced resin material, the thermoplastic resin may be caused to react completely. Alternatively, the thermoplastic resin may be kept in a state of reacting only to some extent (or decreasing in reaction speed) and, when manufacturing the molded object, caused to react completely.

At least one of the aims of performing drying and/or heat treatment after adding the thermoplastic resin to the reinforcement fiber bundles or the woven fabric is to resolve the tackiness of the surface of the fiber-reinforced resin material. By resolving the tackiness of the surface of the fiber-reinforced resin material, handleability in the molded object manufacturing process is improved, which contributes to improved productivity. Moreover, by using the fiber-reinforced resin material, the first layer 10 and molded object 1 without anisotropy can be obtained easily, and high handleability in the manufacturing process contributes to improved productivity.

The temperatures and times of the drying and heat treatment after adding the thermoplastic resin to the reinforcement fiber bundles or the woven fabric depend on the types of the thermoplastic resin, curing agent, and solvent. In the case of epoxy resin, preferably the drying is performed at 40°C to 100°C for about 1 minute to 1 hour and the heat treatment is performed at 100°C to 250°C for about 1 minute to 1 hour. More preferably, the drying is performed at 50°C to 80°C for 10 minutes to 30 minutes, and the heat treatment is performed at 120°C to 180°C for 3 minutes to 40 minutes. A fiber-reinforced resin molded object having excellent appearance can be manufactured with excellent productivity in the aforementioned range.

In the case of obtaining the strip-shaped fiber-reinforced resin material including the reinforcement fiber bundles each composed of a plurality of reinforcement fibers aligned unidirectionally, after adding the thermoplastic resin to the carbon fiber bundles and drying and/or heat treating them, the carbon fibers provided with the thermoplastic resin may be cut in a direction approximately perpendicular to the fiber axial direction of the reinforcement fiber bundle made up of the plurality of reinforcement fibers aligned unidirectionally, to form a strip shape. The preferable length of the strip-shaped fiber-reinforced resin material has been described with regard to the reinforcement fiber bundles. The reinforcement fiber bundle provided with the thermoplastic resin may also be cut in the fiber axial direction.

The fiber-reinforced resin material including the thermoplastic resin and the reinforcement filaments and the strip-shaped fiber-reinforced resin material including the thermoplastic resin and the reinforcement fiber bundles each composed of a plurality of reinforcement fibers aligned unidirectionally are obtained in this way.

The sheet-like object made of the fiber-reinforced resin material including the thermoplastic resin and the reinforcement filaments and the stack object obtained by three-dimensionally and randomly stacking the strip-shaped fiber-reinforced resin material including the thermoplastic resin and the reinforcement fiber bundles each composed of a plurality of reinforcement fibers aligned unidirectionally are then stacked to obtain a layered object.

In detail, on the sheet-like object made of the fiber-reinforced resin material including the thermoplastic resin and the reinforcement filaments, the stack object may be formed by three-dimensionally and randomly stacking the strip-shaped fiber-reinforced resin material including the plurality of reinforcement fiber bundles independent of each other and the thermoplastic resin, for example by dropping the strip-shaped fiber-reinforced resin material from above or dropping the strip-shaped fiber-reinforced resin material from above and then applying vibration. After three-dimensionally and randomly stacking the strip-shaped fiber-reinforced resin material, the strip-shaped fiber-reinforced resin material may be pressed lightly. This stabilizes the three-dimensionally and randomly stacked strip-shaped fiber-reinforced resin.

Another method is to three-dimensionally and randomly stack the strip-shaped fiber-reinforced resin on a stainless steel plate or the like, heat the fiber-reinforced resin after or while lightly pressing it as in the above way to partly fuse the material to form the stack object, and stack at least one sheet of the stack object on the sheet-like object made of the fiber-reinforced resin material including the thermoplastic resin and the reinforcement filaments, thus obtaining the layered object.

In the case of forming the molded object having the second layer 20 on both surfaces of the first layer 10, a layered object may be obtained by further placing a sheet-like object made of the fiber-reinforced resin material including the thermoplastic resin and the reinforcement filaments on a layered object obtained by forming, on a sheet-like object made of the fiber-reinforced resin material including the thermoplastic resin and the reinforcement filaments, a stack object obtained by three-dimensionally and randomly stacking the strip-shaped fiber-reinforced resin material including the thermoplastic resin and the reinforcement fiber bundles each composed of a plurality of reinforcement fibers aligned unidirectionally.

The layered object of the sheet-like object and stack object is then subjected to heating and pressure application. The molded object 1 can be manufactured in this way.

Heating and pressure application may be performed simultaneously to obtain the molded object. Alternatively, the molded object may be obtained by heating the layered object to sufficiently soften the thermoplastic resin and then performing pressure application or pressure application with heating until the thermoplastic resin cures.

Examples of the pressure application method include die pressing, autoclave, and heating/cold pressing.

The heating temperature depends on the type of the thermoplastic resin, the glass transition point of the reinforcement fibers, and the thickness of the layered object or molded object, but is about 150°C to 400°C. The heating temperature is preferably 300°C or less. The applied pressure is about 1 MPa to 50 MPa. The pressure application time is about 1 minute to 60 minutes.

In the case of manufacturing a flat sheet-like molded object, the layered object may be passed between pressure rollers after heating, or passed between heating/pressure rollers after or without preheating.

The pressure application may be performed in a vacuum environment. This suppresses the formation of a space inside the molded object.

Once a flat sheet-like molded object has been formed, depending on the intended shape or use, the molded object may be heated and pressurized using dies or the like as mentioned above and then cooled into the intended shape. Preferably, the pressure application may be performed or the heating and the pressure application may be simultaneously performed in a vacuum environment. The molded object may be preheated.

In terms of the stability in shape and strength of the molded object, it is preferable to once manufacture a flat sheet-like molded object and then process the molded object into an uneven molded object.

In the case of manufacturing the flat sheet-like molded object once, heating and pressure application may be performed at lower temperature and lower pressure than when manufacturing the uneven molded object, in terms of moldability.

In particular, by once manufacturing the flat sheet by heating it at lower temperature than the temperature at which the cross-linking agent added to the thermoplastic resin solution starts cross-linking reaction and, when manufacturing the molded object of the intended shape, heating it at at least the temperature at which the cross-linking agent starts cross-linking reaction, molding is facilitated and a molded object whose shape has excellent thermal stability can be easily obtained.

A molded object having large unevenness which has conventionally been difficult to mold can be obtained by the aforementioned manufacturing method. Hence, various molded objects can be produced using a fiber-reinforced resin material including reinforcement fibers and especially carbon fibers.

### [Example]

The following further describes the molded object according to this embodiment by way of examples, although the present invention is not limited to these examples. In the examples, molded objects having the structure illustrated in FIG. 1B were produced. The term "parts" in the following examples denotes "parts by mass".

### [Example 1]

### <Production of stack object>

In this example, a bundle of 24000 (24K) single fibers of carbon fibers was used as the reinforcement fiber bundle in which the plurality of reinforcement fibers are aligned unidirectionally (PAN carbon fibers (T700SC made by Toray Industries, Inc.)).

First, while directly drawing out the carbon fiber bundle from a drum on which the carbon fiber bundle had been wound without opening treatment, the following thermoplastic resin solution was added to one surface of the carbon fiber bundle using a kiss roll.

### <Thermoplastic resin solution>

- Thermoplastic epoxy resin (late-reactive resin, DENATITE XNR6850V made by Nagase ChemteX Corporation): 100 parts
- Curing agent (DENATITE XNH6850V made by Nagase ChemteX Corporation): 6.5 parts
- Methyl ethyl ketone: 10 parts

The viscosity of the thermoplastic resin solution was 80 mPa·s. The viscosity was measured using a B type viscometer (Toki Sangyo Co., Ltd.: TVB-15 viscometer) with rotor No. 20, 12 rpm, and room temperature (15°C).

The upper and lower surfaces of the carbon fiber bundle provided with the thermoplastic resin solution were then brought into contact with four rolls (the upper and lower surfaces of the carbon fiber bundle were alternately brought into contact twice each) for squeezing. After this, the carbon fiber bundle provided with the thermoplastic resin solution was dried at 60°C for 20 minutes, heat treated at 150°C for 20 minutes to cause the thermoplastic resin to react, cooled to normal temperature, and then wound on a drum to obtain a tape-like fiber-reinforced resin material with the late-reactive thermoplastic resin added to the reinforcement fiber bundle with a length of 50 m, a width of 4 mm, and a thickness of 0.38 mm. The glass transition point of the thermoplastic resin in the thermoplastic resin solution was 100°C.

Next, the tape-like fiber-reinforced resin material was cut approximately perpendicularly to the fiber axial direction of the carbon fibers to a length of 20 mm to 30 mm, to obtain a strip-shaped fiber-reinforced resin material (strip-shaped reinforcement fiber bundle) with a length of 20 mm to 30 mm, a width of 4 mm, and a thickness of 0.38 mm. The Vf value of the obtained fiber-reinforced resin material was 45%. The length of the carbon fibers in the obtained fiber-reinforced resin material was the same as the length of the fiber-reinforced resin material, i.e. 20 mm to 30 mm, as the carbon fibers were filaments.

As a result of observing the cut section of the fiber-reinforced resin material using an electron microscope with 100 magnification, the thermoplastic resin was found to have entered into the center part of the carbon fiber bundle.

Next, the strip-shaped fiber-reinforced resin material was three-dimensionally and randomly stacked in a stainless steel mold, heated at 170°C for 5 minutes, and then cooled and removed from the stainless steel mold. As a result, part of the thermoplastic resin melted, and a stack object with each strip-shaped fiber-reinforced resin material partly adhering together was obtained.

### <Production of sheet-like object>

In this example, plain woven fabric formed using carbon fibers of filaments (TORAYCA® CO6343B made by Toray Industries, Inc., plain woven fabric obtained by using a carbon fiber bundle of 3K combining 3000 carbon fibers) was used as the reinforcement filaments.

First, the plain woven fabric was immersed in the same thermoplastic resin solution as that used when producing the stack object, to add the thermoplastic resin solution to the plain woven fabric.

The upper and lower surfaces of the plain woven fabric provided with the thermoplastic resin solution were then brought into contact with 10 rolls (the upper and lower surfaces of the plain woven fabric were alternately brought into contact five times each) for squeezing. After this, the plain woven fabric provided with the thermoplastic resin solution was dried at 60°C for 20 minutes, and heat treated at 150°C for 20 minutes to obtain a sheet-like fiber-reinforced resin material with the late-reactive thermoplastic resin added to the woven fabric formed using the carbon fibers of filaments with a length of 50 m, a width of 48 cm, and a thickness of 0.39 mm. The thermoplastic resin in the thermoplastic resin solution had a glass transition point of 100°C and a Vf value of 50%.

### <Production of molded object>

First, one stack object and two sheet-like objects produced as mentioned above were prepared, and the stack object was sandwiched between the two sheet-like objects to obtain a layered object.

The layered object was heated at 180°C for 5 minutes, and then immediately subjected to pressure at 1 kN for 1 minute, to obtain a flat molded object. FIG. 3 is a view illustrating the flat molded object obtained in this way.

The molded object was then preheated at 200°C in a vacuum environment (-0.1 MPa), and heated and pressurized at 200°C and 500 kN for 3 minutes using a mold with a depth of unevenness of 5 cm, to obtain a molded object with a depth of unevenness of 5 cm. The thickness of the obtained molded object was 1.86 mm. The thickness of the first layer 10 was 1.3 mm, and the thickness of each second layer 20 was 0.28 mm. The Vf value of the molded object was 52%.

FIGS. 4 and 5 are views illustrating the molded object obtained in this way. FIG. 4 is an appearance view as seen from the front, and FIG. 5 is an appearance view as seen from the back. As illustrated in FIGS. 4 and 5, the molded object had no large hole and the like, and showed excellent design with the appearance of the texture of the woven fabric.

As a result of cutting the molded object and observing the section using an electron microscope, the molded object was filled with the carbon fibers and the thermoplastic resin without any space (cavity) inside.

### [Example 2]

### <Production of stack layered object>

In this example, a bundle of 24000 (24K) single fibers of carbon fibers was used as the reinforcement fiber bundle in which the plurality of reinforcement fibers are aligned unidirectionally (PAN carbon fibers (T700SC made by Toray Industries, Inc.)).

First, while directly drawing out the carbon fiber bundle from a drum on which the carbon fiber bundle had been wound without opening treatment, the following thermoplastic resin solution was added to one surface of the carbon fiber bundle using a kiss roll.

### <Thermoplastic resin solution>

- Thermoplastic epoxy resin (late-reactive resin, DENATITE XNR6850V made by Nagase ChemteX Corporation): 100 parts
- Curing agent (DENATITE XNH6850V made by Nagase ChemteX Corporation): 6.5 parts
- Curing agent (book-type isocyanate-based compound with 3 functional groups): 5 parts
- Methyl ethyl ketone: 10 parts

The viscosity of the thermoplastic resin solution was 80 mPa·s. The viscosity was measured using a B type viscometer (Toki Sangyo Co., Ltd.: TVB-15 viscometer) with rotor No. 20, 12 rpm, and room temperature (15°C).

The upper and lower surfaces of the carbon fiber bundle provided with the thermoplastic resin solution were then brought into contact with four rolls (the upper and lower surfaces of the carbon fiber bundle were alternately brought into contact twice each) for squeezing. After this, the carbon fiber bundle provided with the thermoplastic resin solution was dried at 60°C for 20 minutes, heat treated at 150°C for 20 minutes, cooled to normal temperature, and then wound on a drum to obtain a tape-like fiber-reinforced resin material with the late-reactive thermoplastic resin added to the reinforcement fiber bundle with a width of 4 mm and a thickness of 0.38 mm. The glass transition point of the thermoplastic resin in the thermoplastic resin solution was 100°C.

Next, the tape-like fiber-reinforced resin material was cut approximately perpendicularly to the fiber axial direction of the carbon fibers to a length of 30 mm, to obtain a strip-shaped fiber-reinforced resin material (strip-shaped reinforcement fiber bundle) with a length of 30 mm, a width of 4 mm, and a thickness of 0.38 mm. The Vf value of the obtained fiber-reinforced resin material was 45%. The length of the carbon fibers in the obtained fiber-reinforced resin material was the same as the length of the fiber-reinforced resin material, i.e. 30 mm, as the carbon fibers were filaments.

As a result of observing the cut section of the fiber-reinforced resin material using an electron microscope with 100 magnification, the thermoplastic resin was found to have entered into the center part of the carbon fiber bundle.

Next, the strip-shaped fiber-reinforced resin material was three-dimensionally and randomly stacked in a stainless steel mold, heated at 270°C for 5 minutes, and then cooled and removed from the stainless steel mold. As a result, part of the thermoplastic resin melted, and a stack object with each strip-shaped fiber-reinforced resin material partly adhering together was obtained.

### <Production of sheet-like object>

In this example, plain woven fabric formed using carbon fibers of filaments (TORAYCA® CO6343B made by Toray Industries, Inc., plain woven fabric obtained by using a carbon fiber bundle of 3K combining 3000 carbon fibers) was used as the reinforcement filaments.

First, the plain woven fabric was immersed in the same thermoplastic resin solution as that used when producing the stack object, to add the thermoplastic resin solution to the plain woven fabric.

The upper and lower surfaces of the plain woven fabric provided with the thermoplastic resin solution were then brought into contact with 10 rolls (the upper and lower surfaces of the plain woven fabric were alternately brought into contact five times each) for squeezing. After this, the plain woven fabric provided with the thermoplastic resin solution was dried at 60°C for 20 minutes, and heat treated at 110°C for 10 minutes to obtain a sheet-like object of a sheet-like fiber-reinforced resin material with the late-reactive thermoplastic resin added to the woven fabric formed using the carbon fibers of filaments with a width of 48 cm and a thickness of 0.39 mm. The thermoplastic resin in the thermoplastic resin solution had a glass transition point of 100°C and a Vf value of 50%.

### <Production of molded object>

The stack object and the sheet-like objects produced as mentioned above were cut to a length of 20 cm and a width of 20 cm, and the stack object was sandwiched between the two sheet-like objects to obtain a layered object.

The layered object was preheated at 270 °C in a vacuum environment (-0.1 MPa), and heated and pressurized at 270°C and 4 MPa for 15 minutes using a mold with a depth of unevenness of 5 cm, to obtain a molded object with a depth of unevenness of 5 cm. The thickness of the obtained molded object was 3.66 mm. The thickness of the first layer 10 obtained from the stack object was 3.10 mm, and the thickness of the second layer 20 obtained from the sheet-like object was 0.28 mm. The Vf value of the molded object was 52%.

The molded object had no large hole and the like, and showed excellent design with the appearance of the texture of the woven fabric.

As a result of cutting the molded object and observing the section using an electron microscope, the molded object was filled with the carbon fibers and the thermoplastic resin without any space (cavity) inside.

When the layered object obtained by sandwiching one stack object between the two sheet-like objects was preheated not at 270°C but at 200°C in a vacuum environment (-0.1 MPa) and then heated and pressurized at 200°C and 4 MPa for 3 minutes using a mold with a depth of unevenness of 5 cm, the layered object deformed to some extent but was unable to be molded in the intended shape, and also many voids were seen in the stack object. Thus, the desired molded object was able to be obtained at 270°C but not at 200°C. This demonstrates that the thermal stability of the shape was improved in the case of adding the cross-linking agent to the thermoplastic resin solution.

### (Reference Example)

Molded objects in the case of performing unevenness treatment on only the layered object in Example 1 are described as reference examples below.

### (Reference Example 1)

In Reference Example 1, the layered object in Example 1 was preheated at 200°C in a vacuum environment (-0.1 MPa), and then heated and pressurized at 200°C and 500 kN for 10 minutes using a mold with a depth of unevenness of 0.5 cm, to obtain a molded object with a depth of unevenness of 0.5 cm. The obtained molded object had a thickness of 1.50 mm and a Vf value of 48%.

FIG. 6 is a view illustrating the obtained molded object as seen from the front. As illustrated in FIG. 6, the obtained molded object had no large hole and the like.

### (Reference Example 2)

In Reference Example 2, the layered object in Example 1 was preheated at 200°C in a vacuum environment (-0.1 MPa), and then heated and pressurized at 200°C and 500 kN for 3 minutes using a mold with a depth of unevenness of 5 cm, to obtain a molded object with a depth of unevenness of 5 cm. The obtained molded object had a thickness of 1.50 mm and a Vf value of 52%.

FIGS. 7 and 8 are views illustrating the molded object obtained in this way. FIG. 7 is an appearance view as seen from the front, and FIG. 8 is an appearance view as seen from the back. As illustrated in FIGS. 7 and 8, the molded object in Reference Example 2 had a large hole in the bottom and side surfaces.

Thus, the molded object according to each of the examples has excellent appearance and excellent strength. Even when the molded object (molded product) has deep unevenness, the molded object can be manufactured easily without perforation. Such a molded object can be used as various parts or products, while such use has conventionally been difficult due to the problem of moldability. This enables the provision of products that are lightweight and strong and contribute to energy saving associated with weight reduction.

### [Reference Signs List]

1 Molded object
10 First layer
10a Strip-shaped reinforcement fiber bundle (strip-shaped fiber-reinforced resin material)
20 Second layer

## Claims

1. A molded object comprising:
a first layer (10) formed using a fiber-reinforced resin material including thermoplastic resin and strip-shaped reinforcement fiber bundles (10a) each composed of a plurality of reinforcement fibers aligned unidirectionally, the strip-shaped reinforcement fiber bundles being three-dimensionally and randomly stacked; and
a second layer (20) made of a fiber-reinforced resin material including thermoplastic resin and reinforcement fibers of filaments, ,
**characterized in that** each of the thermoplastic resin included in the first layer (10) and the thermoplastic resin included in the second layer (20) is late-reactive thermoplastic epoxy resin obtained as a result of reaction after being added to the reinforcement fiber,
the second layer (20) is formed on both surfaces of the first layer (10), and
the late-reactive thermoplastic resin is reactive resin that is cured as a result of initiating or promoting reaction by adding a curing agent.

2. The molded object according to claim 1,
wherein the reinforcement fibers used in the second layer (20) are in woven fabric form.

3. The molded object according to claim 1 or 2,
wherein the strip-shaped reinforcement fiber bundles (10a) are each 5 mm or more and 500 mm or less in length.

4. The molded object according to any one of claim 1 to claim 3,
wherein the reinforcement fibers used in each of the first layer (10) and the second layer (20) are carbon fibers.

5. The molded object according to any one of claim 1 to claim 4,
wherein the inside of the reinforcement fiber bundles is impregnated with the thermoplastic resin.

6. The molded object according to any one of claim 1 to claim 5,
wherein the molded object has an unevenness having a depth of 1 cm or more.

7. The molded object according to claim 6, wherein a length of the reinforcement fiber bundles in a fiber axial direction in the first layer or a length of the reinforcement fibers in the first layer is less than the depth of the unevenness of the molded object.

8. A method of manufacturing a molded object, the method comprising:
forming two sheet-like objects made of a fiber-reinforced resin material including thermoplastic resin and reinforcement fibers of filaments;
forming a stack object by three-dimensionally and randomly stacking a strip-shaped fiber-reinforced resin material including thermoplastic resin and reinforcement fiber bundles each composed of a plurality of reinforcement fibers aligned unidirectionally; and
heating and applying pressure to a layered object obtained by sandwiching the stack object between two sheet-like objects,
wherein each of the thermoplastic resin in the sheet-like object and the thermoplastic resin in the stack object is late-reactive thermoplastic epoxy resin obtained as a result of reaction after being added to the reinforcement fiber.

9. The method of manufacturing a molded object according to claim 8,
wherein the reinforcement fibers of filaments are in woven fabric form.

10. The method of manufacturing a molded object according to claim 8 or 9, further comprising :
adding a thermoplastic resin solution including the thermoplastic epoxy resin to the reinforcement fibers of filaments in the sheet-like object and to the reinforcement fiber bundles in the stack object.

11. The method of manufacturing a molded object according to claim 10, further comprising :
resolving tackiness of the fiber-reinforced resin material by at least one of drying and performing heat treatment after adding the thermoplastic resin solution including the thermoplastic epoxy resin to the reinforcement fibers of filaments in the sheet-like object and to the reinforcement fiber bundles in the stack object.

## Patentansprüche

1. Geformter Gegenstand, umfassend:
eine erste Schicht (10), die unter Verwendung eines faserverstärkten Harzmaterials gebildet wird, das thermoplastisches Harz und streifenförmige Verstärkungsfaserbündel (10a) enthält, die jeweils aus einer Vielzahl von Verstärkungsfasern bestehen, die unidirektional ausgerichtet sind, wobei die streifenförmigen Verstärkungsfaserbündel dreidimensional und zufällig gestapelt sind; und
eine zweite Schicht (20) aus einem faserverstärkten Harzmaterial mit thermoplastischem Harz und Verstärkungsfasern aus Filamenten,
**dadurch gekennzeichnet, dass** das thermoplastische Harz, das in der ersten Schicht (10) enthalten ist, und das thermoplastische Harz, das in der zweiten Schicht (20) enthalten ist, jeweils ein spätreaktives thermoplastisches Epoxidharz ist, das als Ergebnis einer Reaktion nach Zugabe zu der Verstärkungsfaser erhalten wird,
die zweite Schicht (20) auf beiden Oberflächen der ersten Schicht (10) ausgebildet ist, und
das spätreaktive thermoplastische Harz ein Reaktionsharz ist, das durch Einleiten oder Fördern der Reaktion durch Zugabe eines Härters ausgehärtet wird.

2. Geformter Gegenstand nach Anspruch 1,
wobei die in der zweiten Schicht (20) verwendeten Verstärkungsfasern in Form eines Gewebes vorliegen.

3. Geformter Gegenstand nach Anspruch 1 oder 2,
wobei die streifenförmigen Verstärkungsfaserbündel (10a) jeweils 5 mm oder mehr und 500 mm oder weniger lang sind.

4. Geformter Gegenstand nach einem der Ansprüche 1 bis 3,
wobei die in der ersten Schicht (10) und in der zweiten Schicht (20) verwendeten Verstärkungsfasern jeweils Kohlenstofffasern sind.

5. Geformter Gegenstand nach einem der Ansprüche 1 bis 4,
wobei die Innenseite der Verstärkungsfaserbündel mit dem thermoplastischen Harz imprägniert ist.

6. Geformter Gegenstand nach einem der Ansprüche 1 bis 5,
wobei der geformte Gegenstand eine Unebenheit mit einer Tiefe von 1 cm oder mehr aufweist.

7. Geformter Gegenstand nach Anspruch 6, wobei eine Länge der Verstärkungsfaserbündel in Faserachsrichtung in der ersten Schicht oder eine Länge der Verstärkungsfasern in der ersten Schicht kleiner als die Tiefe der Unebenheit des geformten Gegenstandes ist.

8. Verfahren zur Herstellung eines geformten Gegenstandes, wobei das Verfahren umfasst:
Bildung zweier plattenförmiger Gegenstände aus einem faserverstärkten Harzmaterial, das thermoplastisches Harz und Verstärkungsfasern aus Filamenten enthält;
Bildung eines Stapelobjekts durch dreidimensionales und zufälliges Stapeln eines streifenförmigen faserverstärkten Harzmaterials, das thermoplastisches Harz und Verstärkungsfaserbündel enthält, die jeweils aus einer Vielzahl von Verstärkungsfasern bestehen, die unidirektional ausgerichtet sind; und
Erwärmung und Anwendung von Druck auf einen geschichteten Gegenstand, der durch Einlegen des Stapelobjekts zwischen zwei plattenförmigen Gegenständen erhalten wird,
wobei das thermoplastische Harz in dem plattenförmigen Gegenstand und das thermoplastische Harz in dem Stapelobjekt jeweils ein spätreaktives thermoplastisches Epoxidharz ist, das als Ergebnis einer Reaktion nach Zugabe zu der Verstärkungsfaser erhalten wird.

9. Verfahren zur Herstellung eines geformten Gegenstandes nach Anspruch 8,
wobei die Verstärkungsfasern aus Filamenten in Form eines Gewebes vorliegen.

10. Verfahren zur Herstellung eines geformten Gegenstandes nach Anspruch 8 oder 9, ferner umfassend:
Zugabe einer thermoplastischen Harzlösung, die das thermoplastische Epoxidharz enthält, zu den Verstärkungsfasern aus Filamenten in dem plattenförmigen Gegenstand und zu den Verstärkungsfaserbündeln in dem Stapelobjekt.

11. Verfahren zur Herstellung eines geformten Gegenstandes nach Anspruch 10, ferner umfassend:
Auflösen der Klebrigkeit des faserverstärkten Harzmaterials durch mindestens eine Aktion aus Trocknen und Durchführen einer Wärmebehandlung nach Zugabe der thermoplastischen Harzlösung einschließlich des thermoplastischen Epoxidharzes zu den Verstärkungsfasern aus Filamenten in dem plattenförmigen Gegenstand und zu den Verstärkungsfaserbündeln in dem Stapelobjekt.

## Revendications

1. Objet moulé comprenant :
une première couche (10) formée par utilisation d'un matériau en résine renforcée par des fibres contenant une résine thermoplastique et des faisceaux de fibres de renforcement en forme de bande (10a) composés chacun d'une pluralité de fibres de renforcement alignées de manière unidirectionnelle, les faisceaux de fibres de renforcement en forme de bande étant empilés de manière aléatoire et tridimensionnelle ; et
une deuxième couche (20) faite d'un matériau en résine renforcée par des fibres contenant une résine thermoplastique et des fibres de renforcement de filaments,
**caractérisé en ce que** chacune parmi la résine thermoplastique contenue dans la première couche (10) et la résine thermoplastique contenue dans la deuxième couche (20) est une résine époxy thermoplastique à réaction tardive obtenue en résultat d'une réaction après addition aux fibres de renforcement,
la deuxième couche (20) est formée sur les deux surfaces de la première couche (10), et
la résine thermoplastique à réaction tardive est une résine réactive qui est durcie en résultat de l'initiation ou de la promotion d'une réaction par addition d'un agent durcisseur.

2. Objet moulé selon la revendication 1, dans lequel les fibres de renforcement utilisées dans la deuxième couche (20) sont sous la forme d'une étoffe tissée.

3. Objet moulé selon la revendication 1 ou 2, dans lequel les faisceaux de fibres de renforcement en forme de bande (10a) ont chacun une longueur de 5 mm ou plus et de 500 mm ou moins.

4. Objet moulé selon l'une quelconque des revendications 1 à 3, dans lequel les fibres de renforcement utilisées dans chacune de la première couche (10) et de la deuxième couche (20) sont des fibres de carbone.

5. Objet moulé selon l'une quelconque des revendications 1 à 4, dans lequel l'intérieur des faisceaux de fibres de renforcement est imprégné de la résine thermoplastique.

6. Objet moulé selon l'une quelconque des revendications 1 à 5, lequel objet moulé a une irrégularité ayant une profondeur de 1 cm ou plus.

7. Objet moulé selon la revendication 6, dans lequel la longueur des faisceaux de fibres de renforcement dans la direction axiale des fibres dans la première couche ou la longueur des fibres de renforcement dans la première couche est inférieure à la profondeur de l'irrégularité de l'objet moulé.

8. Procédé de fabrication d'un objet moulé, le procédé comprenant :
la formation de deux objets en forme de feuille faits d'un matériau en résine renforcée par des fibres contenant une résine thermoplastique et des fibres de renforcement de filaments ;
la formation d'un objet empilé par empilement de manière aléatoire et tridimensionnelle d'un matériau en résine renforcé par des fibres en forme de bande contenant une résine thermoplastique et des faisceaux de fibres de renforcement composés chacun d'une pluralité de fibres de renforcement alignées de manière unidirectionnelle ; et
le chauffage et l'application d'une pression à l'objet stratifié obtenu par mise en sandwich de l'objet empilé entre deux objets en forme de feuille,
dans lequel chacune parmi la résine thermoplastique dans l'objet en forme de feuille et la résine thermoplastique dans l'objet empilé est une résine époxy thermoplastique à réaction tardive obtenue en résultat d'une réaction après addition aux fibres de renforcement.

9. Procédé de fabrication d'un objet moulé selon la revendication 8, dans lequel les fibres de renforcement de filaments sont sous forme d'étoffe tissée.

10. Procédé de fabrication d'un objet moulé selon la revendication 8 ou 9, comprenant en outre :
l'addition d'une solution de résine thermoplastique contenant la résine époxy thermoplastiques aux fibres de renforcement de filaments dans l'objet en forme de feuille et dans les faisceaux de fibres de renforcement dans l'objet empilé.

11. Procédé de fabrication d'un objet moulé selon la revendication 10, comprenant en outre :
la résolution du caractère collant du matériau en résine renforcée par des fibres par au moins l'un parmi un séchage et la mise en œuvre d'un traitement à la chaleur après addition de la solution de résine thermoplastique contenant la résine époxy thermoplastique aux fibres de renforcement de filaments dans l'objet analogue à une feuille et aux faisceaux de fibres de renforcement dans l'objet empilé.
